# EUROPÄISCHE PATENTSCHRIFT

(11) **EP 1 475 407 B1**
(45) Veröffentlichungstag und Bekanntmachung des Hinweises auf die Patenterteilung: **20.08.2014**
(21) Anmeldenummer: 04010429.1
(22) Anmeldetag: 03.05.2004
(51) Int. Cl.: C08K 5/51, C08K 5/17, C08K 5/3492, C08K 3/34

(54) **Flammschutzmittel-Nanocomposite-Kombination für thermoplastische Polymere**
Flame retardant nanocomposite combination for thermoplastic polymers
Combinaison d'agent ignifugeant et nanocomposite pour polymères thermoplastiques

(30) Priorität: 08.05.2003 DE 10320465
(43) Veröffentlichungstag der Anmeldung: 10.11.2004
(73) Patentinhaber: Clariant Produkte (Deutschland) GmbH, 65929 Frankfurt am Main (DE)
(72) Erfinder: Hörold, Sebastian, Dr., 86420 Diedorf (DE)

(56) Entgegenhaltungen:
- WO-A-00/68312
- WO-A-02/28953
- WO-A-99/67326

## Beschreibung

Die Erfindung betrifft eine Flammschutzmittel-Nanocomposite-Kombination für thermoplastische Polymere, sowie polymere Formmassen, die solche Flammschutzmittel-Nanocomposite-Kombinationen enthalten.

Im Gegensatz zu konventionellen schichtförmigen Füllstoffen wie Kaolin, Talkum oder Glimmer ist die typische Schichtdicke von Nanocomposites um den Faktor 10 bis 50 dünner. Der Durchmesser der vollständig extrafolierten Nanofüllstoffe schwankt zwischen 100 und 500 nm bei einer Schichtdicke von nur 1 nm.

Die hohe Teilchenfeinheit und das ausgeprägte Längen- zu Dickenverhältnis von über 100 sind dafür verantwortlich, dass bereits mit niedrigen Füllstoffkonzentrationen im Bereich weniger Gewichtsprozent außerordentliche Eigenschaftsverbesserungen bei einer reihe von Polymerwerkstoffen erzielt werden können. Insbesondere die mechanischen, thermischen und Barriereeigenschaften von Thermoplasten können verbessert werden. Durch die Bildung dreidimensionaler Netzwerke kann die Flammbeständigkeit verbessert werden.

Bevorzugt kommen Füllstoffe auf Basis von Aluminiumsilikaten bei der Herstellung von Nanocomposites zum Einsatz. Diese Füllstoffe weisen eine Schichtstruktur auf. Im Schichtsilikat Natriummontmorillonit befinden sich zwischen den Schichten Natriumionen und Wasser, der Abstand der einzelnen Schichten beträgt 1-2 nm. Bei Austausch der Natriumionen gegen organische Ionen, vor allem quarternäre organische Ammoniumverbindungen führt zu Füllstoffen mit deutlich größeren Schichtabständen von 2-3 nm. Diese Füllstoffe werden in der Literatur als Organoclays oder Nanofiller bezeichnet.

Die Herstellung von Polymer-Nanofiller Composites (Nanocomposites) kann durch in situ Polymerisation eines Monomers in den Schichten des entsprechend modifizierten Schichtsilikats erfolgen. Das Monomer kann dabei in Lösung oder ohne Lösemittel in die Schichten des Silikats eindringen. Die Polymerisation kann durch geeignete Initiatoren, die sich ebenfalls in den Schichten befinden müssen, gestartet werden.

In technisch einfacherer Weise können Nanocomposites durch Extrusion hergestellt werden. Dabei werden Nanofiller und Polymer in der Schmelze vermischt. Bei ausreichender Verträglichkeit zwischen Polymer und Schichtsilikat kann das Polymer in die Schichten eindringen.

Werden bei der Herstellung der Nanocomposites die Schichten des Nanofillers ganz oder teilweise dispergiert, sind zwei unterschiedliche Strukturen möglich:
- bei interkalierten Strukturen befinden sich Polymerketten zwischen den Silikatschichten
- bei exfolierten Strukturen sind die einzelnen Silikatschichten vollständig und homogen in der Polymermatrix verteilt.
Es sind auch Gemische beider Strukturen möglich.

Nanocomposites zeigen aufgrund ihrer besonderen Struktur außergewöhnliche Eigenschaftsverbesserungen, u.a. Erhöhung der Steifigkeit, Verbesserung der Schlagzähigkeit, der thermischen Stabilität und der Flammwidrigkeit (Beyer, G., Nanocomposites, ein neuartiges Flammschutzsystem, Fachtagung "Kunststoffe, Brandschutz und Flammschutzmittel" am 28./29.11. 2001 in Würzburg).

Da mit Nanofillern als alleinigem Flammschutzmittel kein ausreichender Flammschutz erreicht werden kann, sind in der Literatur Versuche beschrieben, Nanofiller mit anderen Flammschutzmitteln zu kombinieren.

Die DE 199 21 472 A1 beschreibt eine flammgeschützte Polymerzusammensetzung, bestehend aus Polymer, Magnesium- oder Aluminiumhydroxid und organisch interkaliertem Schichtsilikat.

Die PCT/WO 99/29767 beschreibt die Herstellung einer Polyamid-Nanocomposite Mischung aus Polyamid 6, Wasser und Montmorillonit. Die Zugabe des Nanofillers wirkt sich vorteilhaft auf die Wärme-Form-Beständigkeit aus. Eine flammhemmende Wirkung ist nicht beschreiben.

Die EP-0 132 228 A1 beschreibt flammwidrige verstärkte Polyesterformmassen mit Verstärkungsfüllstoffen (bevorzugt Glasfasern), Flammschutzmitteln, 0,2 bis 4 % eines ggf. organisch modifizierten Schichtsilikates als Anti-Abtropfmittel und 0,05 bis 2 % eines Alkalimetallsalzes einer Monocarbonsäure mit 6 bis 22 C-Atomen. Als flammhemmende Zusatze werden organische Halogenverbindungen, insbesondere Brom- oder Chlorverbindungen allein oder mit synergistisch wirkenden Phosphor- oder Antimonverbindungen beschrieben.

Es wurde nun überraschend gefunden, dass sich die flammhemmende Wirkung bestimmter phosphororganischer Flammschutzmittel durch den Zusatz von Nanofüllstoffen erheblich verbessern lässt.

Flammschutzmittel müssen häufig in hohen Dosierungen zugesetzt werden, um eine ausreichende Flammwidrigkeit des Kunststoffs nach internationalen Normen sicherzustellen. Aufgrund Ihrer chemischen Reaktivität, die für die Flammschutzwirkung bei hohen Temperaturen erforderlich ist, können Flammschutzmittel die Verarbeitungsstabilität von Kunststoffen beeinträchtigen. Es kann beispielsweise zu verstärktem Polymerabbau, zu Vernetzungsreaktionen, zu Ausgasungen oder Verfärbungen kommen. Effekte, die bei der Kunststoffverarbeitung ohne Flammschutzmittel eventuell gar nicht oder nur in abgeschwächter Form auftreten. Durch die erfindungsgemäße Kombination von Flammschutzmittel mit Nanocomposites kann die Dosierung von Flammschutzmittel deutlich verringert werden, was zu einer verbesserten Verarbeitung der Kunststoffe führt.

Insbesondere für thermoplastische Polymere haben sich die Salze von Phosphinsäuren (Phosphinate) als wirksame flammhemmende Zusätze erwiesen (DE-A-2 252 258 und DE-A-2 447 727). Calcium- und Aluminiumphosphinate sind in Polyestern als besonders effektiv wirksam beschrieben worden und beeinträchtigen die Materialeigenschaften der Polymerformmassen weniger als z.B. die Alkalimetallsalze (EP-A-0 699 708).

Darüber hinaus wurden synergistische Kombinationen von Phosphinaten mit bestimmten stickstoffhaltigen Verbindungen gefunden, die in einer ganzen Reihe von Polymeren als Flammschutzmittel effektiver wirken, als die Phosphinate allein (PCT/EP97/01664 sowie DE-A-197 34 437 und DE-A-197 37 727).

Zur Stabilisierung von Polymerformmassen mit phosphorhaltigen Flammschutzmitteln haben sich Carbodiimide, Isocyanate und Isocyanurate als wirksam erwiesen (DE-A-199 20 276).

Die DE-A-196 14 424 beschreibt Phosphinate in Verbindung mit Stickstoffsynergisten in Polyestern und Polyamiden. Die DE-A-199 33 901 beschreibt Phosphinate in Kombination mit Melaminpolyphosphat als Flammschutzmittel für Polyester und Polyamide. Die Wirkung der Phosphinate und der Stickstoffsynergisten wird im wesentlichen für Brandprüfungen nach UL 94 Vertikaltest beschrieben. Die Wirkung im Glühdrahttest nach IEC ist aber noch unzureichend. Durch die für den UL 94 Test notwendigen Dosierungen kommt es auch zu Polymerabbau und Verfärbungen der flammwidrig ausgerüsteten Kunststoffe, dem bisher noch nicht wirkungsvoll begegnet werden kann.

Es war daher Aufgabe der vorliegenden Erfindung, Flammschutzmittelkombinationen für Polyamide oder Polyester zur Verfügung zu stellen, die neben der Erfüllung verschiedener, im Elektro- und Elektronikbereich geforderten Brandnormen auch eine stabilisierende Wirkung auf den Kunststoff ausüben. Gelöst wird diese Aufgabe durch Zusatz von Nanofüllstoffen gegebenenfalls zusammen mit stickstoffhaltigen Synergisten als Flammschutzmittel.

Gegenstand der Erfindung ist daher eine Flammschutzmittel-Nanofiller-Kombination für thermoplastische Polymere, enthaltend als Komponente A ein Phosphinsäuresalz der Formel (I) und/oder ein Diphosphinsäuresalz der Formel (II) und/oder deren Polymere, 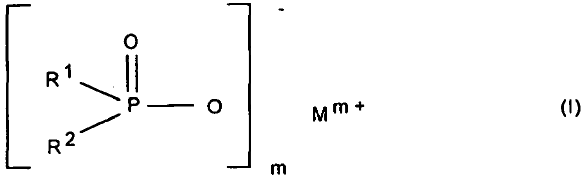 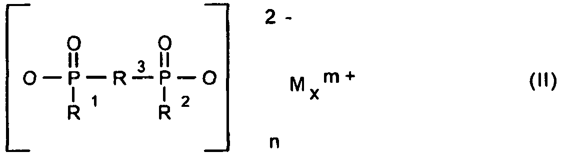 worin
- R¹, R²: gleich oder verschieden sind und C₁-C₆-Alkyl, linear oder verzweigt und/oder Aryl;
- R³: C₁-C₁₀-Alkylen, linear oder verzweigt, C₆-C₁₀-Arylen, -Alkylarylen oder -Arylalkylen;
- M: Al, Sb, Sn, Ge, Ti, Zn, Fe, Zr, Ce, Bi und/oder Mn;
- m: 1 bis 4;
- n: 1 bis 4;
- x: 1 bis 4
bedeuten
als Komponente B Kondensationsprodukte des Melamins und/oder Umsetzungsprodukte des Melamins mit Phosphorsäure oder Polyphosphorsäure und/oder Umsetzungsprodukte von Kondensationsprodukten des Melamins mit Phosphorsäure oder Polyphosphorsäure und/oder Gemische davon, und/oder als Komponente C ein organisch interkaliertes Schichtsilikat, ein nanosphärisches Oxid oder Carbon-Nanotubes, wobei diese einen Schichtabstand von 1,5 bis 4 nm aufweisen.

Bevorzugt sind R¹, R² gleich oder verschieden und bedeuten Methyl, Ethyl, n-Propyl, iso-Propyl, n-Butyl, tert.-Butyl, n-Pentyl und/oder Phenyl.

Bevorzugt bedeutet R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethyl-naphthylen oder tert.-Butylnaphthylen; Phenyl-methylen, Phenyl-ethylen, Phenylpropylen oder Phenyl-butylen bedeutet.

Bevorzugt handelt es sich bei der Komponente B um Kondensationsprodukte des Melamins, wie Melem, Melam, Melon und/oder höherkondensierte Verbindungen davon.

Bevorzugt handelt es sich bei der Komponente B um Umsetzungsprodukte von Melamin mit Polyphosphorsäure und/oder um Umsetzungsprodukte von Kondensationsprodukten des Melamins mit Polyphosphorsäure oder Gemische davon.

Bevorzugt handelt es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs.
Als Ausgangsmaterial für die organisch interkalierten Schichtsilikate werden vorzugsweise quellfähige Smektite, wie Montmorillonit, Hectorit, Saponit oder Beidellit, eingesetzt.

Vorzugsweise sind die Schichtsilikate mit quarternären Ammoniumverbindungen, protonierten Aminen, organischen Phosphoniumionen und/oder Aminocarbonsäuren interkaliert.

Die Erfindung betrifft auch eine flammfest ausgerüstete Kunststoff-Formmasse, enthaltend die erfindungsgemäße Flammschutzmittel-Nanofiller-Kombination, wobei es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/Acrylnitril-Butadien-Styrol) oder PPE/HIPS (Polyphenylenether/Polystyrol-HI) Kunststoffe.

Besonders bevorzugt handelt es sich bei dem Kunststoff um Polyamide, Polyester und PPE/HIPS-Blends.

Bevorzugt wird in der Kunststoff-Formmasse die Komponente A in einer Menge von 2 bis 20 Gew.-%, die Komponente B in einer Menge von 1 bis 30 Gew.-% und die Komponente C in einer Menge von 0,05 bis 20 Gew.-%, bezogen auf die Kunststoff-Formmasse, eingesetzt.

Besonders bevorzugt wird in der Kunststoff-Formmasse die Komponente A in einer Menge von 5 bis 10 Gew.-%, die Komponente B in einer Menge von 5 bis 10 Gew.-% und die Komponente C in einer Menge von 0,05 bis 10 Gew.-%, bezogen auf die Kunststoff-Formmasse, eingesetzt.

Die Erfindung betrifft schließlich auch Polymer-Formkörper, -Filme, -Fäden und -Fasern enthaltend die erfindungsgemäße Flammschutzmittel-Nanofiller-Kombination, dadurch gekennzeichnet, dass es sich bei den Polymer-Formkörpern, -Filmen, -Fäden und -Fasern um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (PolycarbonatlAcrylnitril-Butadien-Styrol), Polyamid, Polyester und/oder ABS handelt.

Bevorzugt enthalten die Polymer-Formkörper, -Filme, -Fäden und -Fasern die Komponente A in einer Menge von 2 bis 20 Gew.-%, die Komponente B in einer Menge von 1 bis 30 Gew.-% und die Komponente C in einer Menge von 0,05 bis 20 Gew.-%, bezogen auf den Polymergehalt.

Besonders bevorzugt enthalten die Polymer-Formkörper, -Filme, -Fäden und -Fasern die Komponente A in einer Menge von 5 bis 10 Gew.-%, die Komponente B in einer Menge von 5 bis 10 Gew.-% und die Komponente C in einer Menge von 0,05 bis 10 Gew.-%, bezogen auf den Polymergehalt.

Bevorzugt handelt es sich bei Komponente C um ein Silikat enthaltend Reste von Bentonite oder Montmorillonit, modifiziert mit einem quarternären organischen Ammoniumkation.

Überraschenderweise wurde gefunden, dass erfindungsgemäße Kombinationen von Phosphinaten und Stickstoffsynergisten wie beispielsweise Melaminpolyphosphat eine deutlich verbesserte Stabilität bei der Einarbeitung in Polymere aufweisen, wenn bestimmte Nanofiller zugesetzt werden.

Die erfindungsgemäßen Kombinationen reduzieren die Verfärbung der Kunststoffe bei der Verarbeitung in der Schmelze und unterdrücken den Abbau der Kunststoffe zu Einheiten mit geringerem Molekulargewicht. Zudem verbessern sie das Brandverhalten.

Bevorzugt bedeutet M Calcium, Aluminium oder Zink.

Unter protonierten Stickstoffbasen werden bevorzugt die protonierten Basen von Ammoniak, Melamin, Triethanolamin, insbesondere NH₄⁺, verstanden.

Geeignete Phosphinate sind in der PCT/WO 97/39053 beschrieben, auf die ausdrücklich Bezug genommen wird.

Bevorzugte Phosphinate sind Aluminium-, Calcium- und Zinkphosphinate.

Bevorzugte Hypophosphite sind Calcium-, Zink- und Aluminiumhypophosphit.

Besonders bevorzugt handelt es sich bei der Komponente B um Melaminpolyphosphat.

In einer anderen Ausführungsform der Kunststoff-Formmasse wird die Komponente A in einer Menge von 2 bis 20 Gew.-% und die Komponente C in einer Menge von 0,05 bis 5 Gew.-%, bezogen auf die Kunststoff-Formmasse, eingesetzt.

In einer anderen Ausführungsform enthalten die Polymer-Formkörper, -Filme, -Fäden und -Fasern die Komponente A in einer Menge von 2 bis 20 Gew.-% und die Komponente C in einer Menge von 0,05 bis 5 Gew.-%, bezogen auf den Polymergehalt.

Bevorzugte stickstoffhaltige Flammschutzmittel Komponenten sind Kondensationsprodukte des Melamins und/oder Umsetzungsprodukte des Melamins mit Phosphorsäure und/oder Umsetzungsprodukte von Kondensationsprodukten des Melamins mit Phosphorsäure und/oder Gemische davon. Besonders bevorzugt sind Melaminphosphat, -pyrophosphat oder -polyphosphat, sowie entsprechende Melam-, Melem- oder Melonphosphate. Ebenfalls bevorzugt ist Ammoniumpolyphosphat.

Die vorgenannten Nanofiller können in den verschiedensten Verfahrensschritten in den Kunststoff eingebracht werden. So ist es bei Polyamiden oder Polyestern möglich, bereits zu Beginn oder am Ende der Polymerisation/Polykondensation oder in einem folgenden Compoundierprozess die Nanofiller in die Polymerschmelze einzumischen. Weiterhin gibt es Verarbeitungsprozesse bei denen die Additive erst später zugefügt werden. Dies wird insbesondere beim Einsatz von Pigment- oder Additivmasterbatches praktiziert. Außerdem besteht die Möglichkeit, insbesondere pulverförmige Additive auf das durch den Trocknungsprozess eventuell warme Polymergranulat aufzutrommeln.

Insbesondere können auch Stickstoffverbindungen der Formeln (III) bis (VIII) oder Gemische davon 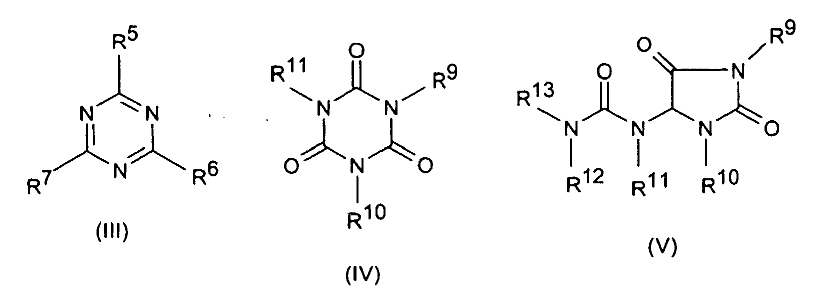 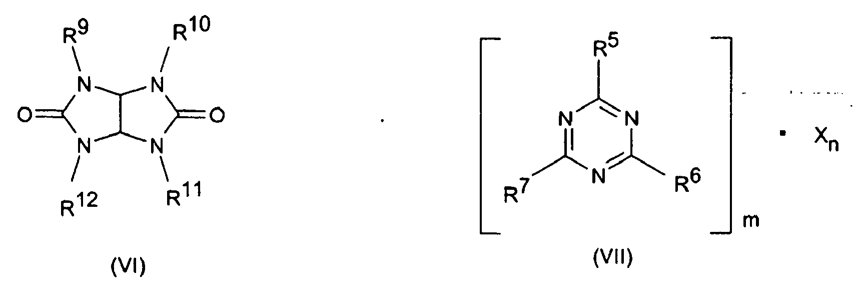 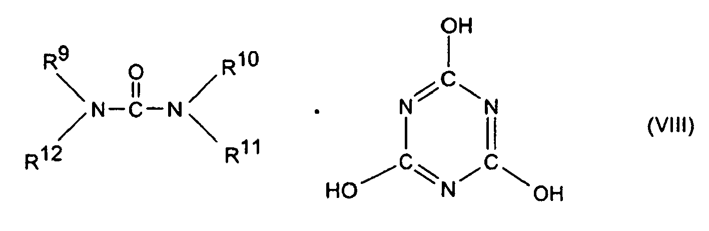 worin
- R⁵ bis R⁷: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy, C₆-C₁₂-Aryl oder -Arylalkyl, -OR⁸ und -N(R⁸)R⁹ , sowie N-alicyclisch oder N-aromatisch,
- R⁸: Wasserstoff, C₁-C₈-Alkyl, C₅-C₁₆-Cycloalkyl oder -Alkylcycloalkyl, möglicherweise substituiert mit einer Hydroxy- oder einer C₁-C₄-Hydroxyalkyl-Funktion, C₂-C₈-Alkenyl, C₁-C₈-Alkoxy, -Acyl, -Acyloxy oder C₆-C₁₂-Aryl oder -Arylalkyl,
- R⁹ bis R¹³: die gleichen Gruppen wie R⁸ sowie -O-R⁸,
- m und n: unabhängig voneinander 1, 2, 3 oder 4,
- X: Säuren, die Addukte mit Triazinverbindungen (III) bilden können, bedeuten, eingearbeitet werden.

Zusätzlich können Carbodiimide enthalten sein.

Erfindungsgemäß sind auch synergistische Kombinationen von den genannten Phosphinaten mit den vorgenannten stickstoffhaltigen Verbindungen, die in einer ganzen Reihe von Polymeren als Flammschutzmittel effektiver wirken, als die Phosphinate allein (DE-A-196 14 424, DE-A-197 34 437 und DE-A-197 37 727). Die Flammschutzwirkung der oberflächenmodifizierten Phosphinate kann durch Kombination mit weiteren Flammschutzmitteln, vorzugsweise stickstoffhaltigen Synergisten oder Phosphor/Stickstoff Flammschutzmitteln verbessert werden.

Bevorzugt enthält die Flammschutzmittelmischung 2 bis 20 Gew.-% an Phosphinat, 5 bis 30 Gew.-% an stickstoffhaltigem Flammschutzmittel und 0,05 bis 5 Gew.-% Metalloxid oder -hydroxid oder gemischten Oxiden-Hydroxiden oder Oxid-Hydroxid-Carbonaten, die Mengenangaben bezogen auf den flammwidrig ausgerüsteten Kunststoff.

Besonders bevorzugt enthält die Flammschutzmittelmischung 5 bis 10 Gew.-% an Phosphinat, 5 bis 10 Gew.-% an stickstoffhaltigem Flammschutzmittel und 0,2 bis 5 Gew.-% Oxid oder -hydroxid oder gemischten Oxiden-Hydroxiden oder Oxid-Hydroxid-Carbonaten, die Mengenangaben bezogen auf den flammwidrig ausgerüsteten Kunststoff.

Bevorzugt wird die Flammschutzmittelmischung in 5 bis 30 Gew.-% den Polyamiden oder Polyestern zugemischt, um eine Flammwidrigkeit zu erreichen.

Bevorzugt liegt die Flammschutzmittelmischung als Granulat, Schuppen, Feinkorn, Pulver und/oder Micronisat vor.

Bevorzugt liegt die Flammschutzmittelmischung als physikalische Mischung der Feststoffe, als Schmelzmischung, als Kompaktat, als Extrudat oder in Form eines Masterbatches vor.

Bevorzugt wird die Mischung in einer Formmasse eines Polyamides oder eines Polyesters verwendet. Geeignete Polyamide sind z.B. in der DE-A-199 20 276 beschrieben.

Bevorzugt handelt es sich bei den Polyamiden um solche vom Aminosäure-Typ und/oder vom Diamin-Dicarbonsäure-Typ.

Bevorzugt handelt es sich bei den Polyamiden um Polyamid 6 und/oder Polyamid 66.

Bevorzugt sind die Polyamide unverändert, gefärbt, gefüllt, ungefüllt, verstärkt, unverstärkt oder auch anders modifiziert.

Bevorzugt handelt es sich bei den Polyestern um Polyethylenterephthalat oder Polybutylenterephthalat.

Bevorzugt sind die Polyester unverändert, gefärbt, gefüllt, ungefüllt, verstärkt, unverstärkt oder auch anders modifiziert.

Besonders bevorzugt beträgt die Gesamtmenge der Flammschutzmittelmischung 5 bis 30 Gew.-% im Polymeren.

Gegebenenfalls können dem Polymeren weitere Additive zugesetzt werden. Als Additive können Wachse, Lichtschutzmittel, Stabilisatoren, Antioxidantien, Antistatika oder Mischungen derartiger Additive zugesetzt werden. Als bevorzugte Stabilisatoren können Phosphonite und Phosphite oder Carbodiimide verwendet werden.

### Beispiele

### 1. Eingesetzte Komponenten

### Handelsübliche Polymere (Granulate):

| | |
|---|---|
| Polyamid 6.6 (PA 6.6-GV): | ® Durethan AKV 30 (Fa. Bayer AG, D) enthält 30 % Glasfasern. |
| Polybutylenterephthalat (PBT-GV): | ® Celanex 2300 GV1/30 (Fa. Ticona, D) enthält 30 % Glasfasern. |

### Flammschutzmittelkomponenten (pulverförmig):

Aluminiumsalz der Diethylphosphinsäure, im folgenden als DEPAL bezeichnet.

® Melapur 200 (Melaminpolyphosphat), im folgenden als MPP bezeichnet, Fa. DSM Melapur, NL
Nanofiller:
® Nanofil 919, Südchemie, Moosburg, D
Organisch modifiziertes nanodisperses Schichtsilikat mit chemischer Funktionalität C18 n-Alkylgruppe, weißes Pulver

### 2. Herstellung, Verarbeitung und Prüfung von flammhemmenden Kunststoff-Formmassen

Die Polymere wurden auf einem Doppelschnecken-Extruder (Typ Berstorff ZE 25/40) bei Temperaturen von 260 bis 310°C (PA 6.6-GV) bzw. von 240 bis 280°C (PBT-GV) verarbeitet. Der homogenisierte Polymerstrang wurde abgezogen, im Wasserbad gekühlt und anschließend granuliert.

Die Flammschutzmittelkomponenten wurden in dem in den Tabellen angegebenen Verhältnis mit dem Nanofiller vermischt und über einen Seiteneinzug der Polymerschmelze zugegeben.

Nach ausreichender Trocknung wurden die Formmassen auf einer Spritzgießmaschine (Typ Arburg 320 C Allrounder) bei Massetemperaturen von 270 bis 320°C (PA 6.6-GV) bzw. von 260 bis 280°C (PBT-GV) zu Prüfkörpern verarbeitet und anhand des UL 94-Tests (Underwriter Laboratories) und der Glühdrahtprüfung nach IEC 60695-2 auf Flammwidrigkeit geprüft und klassifiziert.

Die Fließfähigkeit der Formmassen wurde durch Ermittlung des Schmelzvolumenindex (MVR) bei 275°C/2,16 kg bestimmt. Ein starker Anstieg des MVR-Wertes deutet auf einen Polymerabbau hin.

Die Verarbeitungseigenschaften in Polyester wurden anhand der Spezifischen Viskosität (SV) beurteilt. Aus dem Granulat der Kunststoff-Formmasse wurde nach ausreichender Trocknung eine 1,0 %ige Lösung in Dichloressigsäure hergestellt und der SV-Wert bestimmt. Je höher der SV-Wert ist, desto geringer war der Polymerabbau während der Einarbeitung des Flammschutzmittels.

Sämtliche Versuche der jeweiligen Serie wurden, falls keine anderen Angaben gemacht wurden, aufgrund der Vergleichbarkeit unter identischen Bedingungen (Temperaturprogramme, Schneckengeometrien, Spritzgießparameter, etc.), durchgeführt.

Die Tabellen 1 und 3 zeigen Vergleichsbeispiele, in denen eine Flammschutzmittel-Kombination, basierend auf dem Aluminiumsalz der Diethylphosphinsäure (DEPAL) und dem stickstoffhaltigen Synergisten Melaminpolyphosphat (MPP) und dem Nanofiller allein verwendet wurden.

Die Ergebnisse der Beispiele, in denen die Flammschutzmittel-Nanofiller-Mischung gemäß der Erfindung eingesetzt wurden, sind in den Tabellen 2 und 4 aufgelistet. Alle Mengen sind als Gew.-% angegeben und beziehen sich auf die Kunststoff-Formmasse einschließlich der Flammschutzmittel-Kombination und Zusatzstoffen.

Aus den Beispielen geht hervor, dass die erfindungsgemäßen Zusätze (Mischung aus den Komponenten Phosphinat, Stickstoffsynergist und Nanofiller die Flammschutzwirkung und die Verarbeitung verbessern.

Die Einarbeitung der Flammschutzmittel in PA 6.6 führt zu einem Polymerabbau, erkennbar an hohen MVR-Werten, und zu einer Graubraun-Verfärbung der Formmassen ((Vergleichs) Beispiele 2 bis 4). Es kann nur eine Glühdrahtentzündungstemperatur (GWIT nach IEC 60695-1-13) von 700°C erreicht werden. Durch die alleinige Zugabe von Nanofiller kann keine Flammwidrigkeit erreicht werden ((Vergleichs) Beispiele 5 bis 8).

Wird nun eine erfindungsgemäße Flammschutzmittel-Nanofiller-Mischung aus Phosphinat, Stickstoffsynergist und Nanofiller (erfindungsgemäße Beispiele 9 bis 12) eingesetzt, kann eine deutliche Stabilisierung der flammgeschützten Polyamidschmelze und eine wesentlich verminderte Verfärbung der Prüfkörper festgestellt werden. Zudem wird jetzt eine Glühdrahtentzündungstemperatur von über 800°C beobachtet.

Die Einarbeitung der Flammschutzmittel in Polyester (PBT) führt sowohl durch Depal als auch durch Melaminpolyphosphat zu Polymerabbau, erkennbar an Verringerung der SV Zahl und Gelbverfärbung beobachtet. Die Kombination von Depal und Melaminpolyphosphat führt zu einer V-0 Einstufung bei 15 Gew.-% Flammschutzmittel. Die Glühdrahtentzündungstemperatur beträgt aber ähnlich wie bei Polyamid nur maximal 700°C. Nanofiller zeigen allein so gut wie keine Wirkung als Flammschutzmittel (Tabelle 3).

In flammgeschütztem Polyester (PBT) wurde bei Anwendung der erfindungsgemäßen Kombination von Phosphinat, Stickstoffsynergist und Nanofiller ein deutlich verminderter Polymerabbau, erkennbar an hohen SV-Zahlen, und eine deutlich geringere Verfärbung festgestellt (Tabelle 4). Zudem wird jetzt eine Glühdrahtentzündungstemperatur von über 800°C beobachtet.

Soweit nicht anders Angegeben, handelt es sich bei Mengenangaben immer um Gew.-%.

**Tabelle 1: Vergleichsbeispiele (Versuchsreihe 1): Flammschutz-Formmassen mit den Komponenten als einzelne Additive in glasfaserverstärktem PA 6.6.**

| Vergleich | DEPAL [%] | MPP [%] | Nanofill 919 | Klasse nach UL 94 (0,8 mm) | GWIT/IEC 60695-2-13 [°C] | MVR (cm³/10'] | Farbe* |
|---|---|---|---|---|---|---|---|
| 1 | 0 | 0 | 0 | n.k.^{**)} | 550 | 19 | weiß |
| 2 | 10 | 5 | 0 | V-0 | 700 | 44 | grau-braun |
| 3 | 0 | 10 | 0 | n.k. | 650 | 55 | grau |
| 4 | 10 | 0 | 0 | V-2 | 650 | 20 | braun |
| 5 | 0 | 0 | 1 | n.k. | 550 | 21 | weiß |
| 6 | 0 | 0 | 2 | n.k. | 550 | 21 | weiß |
| 7 | 0 | 0 | 5 | n.k. | 600 | 21 | weiß |
| 8 | 0 | 0 | 10 | V-2. | 650 | 21 | weiß |

| | | | | | | | |
|---|---|---|---|---|---|---|---|
| ^{*)} von Prüfkörper, Massetemperatur beim Spritzgießen: 300°C | | | | | | | |
| ^{**)}n.k. = nicht klassifizierbar | | | | | | | |

**Tabelle 2: Erfindungsgemäße Beispiele: Flammschutz-Formmassen mit der Kombination von Depal mit Stickstoffsynergist und Metalloxid bzw. Hydroxid in glasfaserverstärktem PA 6.6.**

| Beispiele (Erfindung) | DEPAL [%] | MPP [%] | Nanofil 919 [%] | Klasse nach UL 94 (0,8 mm) | GWIT / IEC 60695-2-13 [°C] | MVR [cm³/10'] | Farbe* |
|---|---|---|---|---|---|---|---|
| 9 | 10 | 5 | 2 | V-0 | 750 | 19 | weiß |
| 10 | 10 | 5 | 5 | V-0 | 800 | 17 | weiß |
| 11 | 8 | 4 | 2 | V-0 | 750 | 21 | weiß |
| 12 | 5 | 5 | 5 | V-0 | 750 | 22 | weiß |

| | | | | | | | |
|---|---|---|---|---|---|---|---|
| ^{*)} von Prüfkörper, Massetemperatur beim Spritzgießen: 300°C | | | | | | | |

**Tabelle 3: Vergleichsbeispiele: Flammschutz-Formmassen mit den Komponenten als einzelne Additive in glasfaserverstärktem PBT**

| Vergleich | DEPAL [%] | MPP [%] | Nanofill 919 | Klasse nach UL 94 (0,8 mm) | GWIT / IEC 60695-2-13 [°C] | SV-Zahl | Farbe* |
|---|---|---|---|---|---|---|---|
| 13 | 0 | 0 | 0 | n.k.^{**)} | 550 | 1200 | weiß |
| 14 | 10 | 5 | 0 | V-0 | 700 | 744 | weiß |
| 15 | 0 | 10 | 0 | n.k. | 650 | 1134 | weiß |
| 16 | 10 | 0 | 0 | V-2 | 650 | 643 | weiß |
| 17 | 0 | 0 | 2 | n.k. | 550 | 1251 | weiß |
| 18 | 0 | 0 | 5 | n.k. | 550 | 1238 | weiß |

| | | | | | | | |
|---|---|---|---|---|---|---|---|
| ^{*)} von Prüfkörper, Massetemperatur beim Spritzgießen: 275°C | | | | | | | |

**Tabelle 4: Erfindungsgemäße Beispiele: Flammschutz-Formmassen mit der Kombination von Depal mit Stickstoffsynergist und Nanofiller in glasfaserverstärktem PBT**

| Beispiele (Erfindung) | DEPAL [%] | MPP [%] | Nanofil 919 [%] | Klasse nach UL 94 (0,8 mm) | GWIT/IEC 60695-2-13 [°C] | SV Zahl | Farbe* |
|---|---|---|---|---|---|---|---|
| 19 | 10 | 5 | 2 | V-0 | 750 | 1213 | weiß |
| 20 | 10 | 5 | 5 | V-0 | 800 | 1289 | weiß |
| 21 | 8 | 4 | 2 | V-0 | 750 | 1199 | weiß |
| 22 | 5 | 5 | 5 | V-1 | 750 | 1168 | weiß |

| | | | | | | | |
|---|---|---|---|---|---|---|---|
| ^{*)} von Prüfkörper, Massetemperatur beim Spritzgießen: 275°C | | | | | | | |

## Patentansprüche

1. Flammschutzmittel-Nanofiller-Kombination für thermoplastische Polymere, enthaltend als Komponente A ein Phosphinsäuresalz der Formel (I) und/oder ein Diphosphinsäuresalz der Formel (II) und/oder deren Polymere, 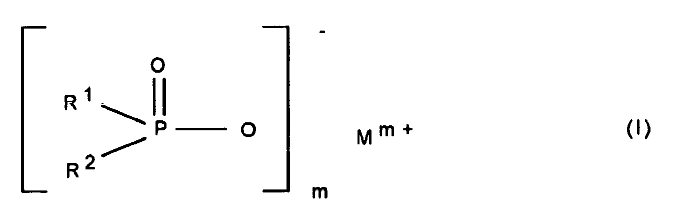 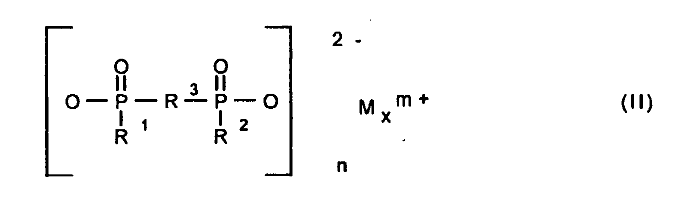 worin
R¹, R² gleich oder verschieden sind und C₁-C₆-Alkyl, linear oder verzweigt und/oder Aryl;
R³ C₁-C₁₀-Alkylen, linear oder verzweigt, C₆-C₁₀-Arylen, -Alkylarylen oder -Arylalkylen;
M Mg, Ca, Al, Sb, Sn, Ge, Ti, Zn, Fe, Zr, Ce, Bi, Sr, Mn, Li, Na, K und/oder eine protonierte Stickstoffbase;
m 1 bis 4;
n 1 bis 4;
x 1 bis 4
bedeuten
als Komponente B Kondensationsprodukte des Melamins und/oder Umsetzungsprodukte des Melamins mit Phosphorsäure oder Polyphosphorsäure und/oder Umsetzungsprodukte von Kondensationsprodukten des Melamins mit Phosphorsäure oder Polyphosphorsäure und/oder Gemische davon, und als Komponente C organisch interkalierte Schichtsilikate, ein nanosphärisches Oxid oder Carbon-Nanotubes, wobei diese einen Schichtabstand von 1,5 bis 4 nm aufweisen.

2. Flammschutzmittel-Nanofiller-Kombination nach Anspruch 1, **dadurch gekennzeichnet, dass** R¹, R² gleich oder verschieden sind und Methyl, Ethyl, n-Propyl, iso-Propyl, n-Butyl, tert.-Butyl, n-Pentyl und/oder Phenyl bedeuten.

3. Flammschutzmittel-Nanofiller-Kombination nach Anspruch 1 oder 2, **dadurch gekennzeichnet, dass** R³ Methylen, Ethylen, n-Propylen, iso-Propylen, n-Butylen, tert.-Butylen, n-Pentylen, n-Octylen oder n-Dodecylen; Phenylen oder Naphthylen; Methyl-phenylen, Ethyl-phenylen, tert.-Butylphenylen, Methyl-naphthylen, Ethylnaphthylen oder tert.-Butylnaphthylen; Phenyl-methylen, Phenyl-ethylen, Phenylpropylen oder Phenyl-butylen bedeutet.

4. Flammschutzmittel-Nanofiller-Kombination nach einem oder mehreren der Ansprüche 1 bis 3, **dadurch gekennzeichnet, dass** es sich bei der Komponente B um Kondensationsprodukte des Melamins wie Melem, Melam, Melon und/oder höherkondensierte Verbindungen davon handelt.

5. Flammschutzmittel-Nanofiller-Kombination nach einem oder mehreren der Ansprüche 1 bis 4, **dadurch gekennzeichnet, dass** es sich bei der Komponente B um Umsetzungsprodukte von Melamin mit Polyphosphorsäure und/oder um Umsetzungsprodukte von Kondensationsprodukten des Melamins mit Polyphosphorsäure oder Gemische davon handelt.

6. Flammschutzmittel-Nanofiller-Kombination nach einem oder mehreren der Ansprüche 1 bis 5, **dadurch gekennzeichnet, dass** es sich bei den Umsetzungsprodukten um Dimelaminpyrophosphat, Melaminpolyphosphat, Melempolyphosphat, Melampolyphosphat, Melonpolyphosphat und/oder gemischte Polysalze dieses Typs handelt.

7. Flammschutzmittel-Nanofiller-Kombination nach einem oder mehreren der Ansprüche 1 bis 6, **dadurch gekennzeichnet, dass** es sich bei den organisch interkalierten Schichtsilikaten um Materialien handelt, deren Ausgangsmaterialien quellfähige Smektite, wie Montmorillonit, Hectorit, Saponit oder Beidellit sind.

8. Flammschutzmittel-Nanofiller-Kombination nach einem oder mehreren der Ansprüche 1 bis 7, **dadurch gekennzeichnet, dass** die Schichtsilikate mit quaternären Ammoniumverbindungen, protonierten Aminen, organischen Phosphoniumionen und/oder Aminocarbonsäuren interkaliert sind.

9. Flammfest ausgerüstete Kunststoff-Formmasse, enthaltend eine Flammschutzmittel-Nanofiller-Kombination gemäß einem oder mehreren der Ansprüche 1 bis 8, **dadurch gekennzeichnet, dass** es sich bei dem Kunststoff um thermoplastischen Polymere der Art Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) oder PPE/HIPS (Polyphenylenether/Polystyrol-HI) Kunststoffe handelt.

10. Flammfest ausgerüstete Kunststoff-Formmasse gemäß Anspruch 9, **dadurch gekennzeichnet, dass** es sich bei dem Kunststoff um Polyamide, Polyester und PPE/HIPS-Blends handelt.

11. Flammfest ausgerüstete Kunststoff-Formmasse gemäß Anspruch 9 oder 10, **dadurch gekennzeichnet, dass** die Komponente A in einer Menge von 2 bis 20 Gew.-%, die Komponente B in einer Menge von 1 bis 30 Gew.-% und die Komponente C in einer Menge von 0,05 bis 20 Gew.-%, bezogen auf die Kunststoff-Formmasse, eingesetzt wird.

12. Flammfest ausgerüstete Kunststoff-Formmasse gemäß einem oder mehreren der Ansprüche 9 bis 11, **dadurch gekennzeichnet, dass** die Komponente A in einer Menge von 5 bis 10 Gew.-%, die Komponente B in einer Menge von 5 bis 10 Gew.-% und die Komponente C in einer Menge von 0,05 bis 10 Gew.-%, bezogen auf die Kunststoff-Formmasse, eingesetzt wird.

13. Polymer-Formkörper, -Filme, -Fäden und -Fasern enthaltend eine Flammschutz-mittel-Stabilisator-Kombination gemäß einem oder mehreren der Ansprüche 1 bis 8, **dadurch gekennzeichnet, dass** es sich bei dem Polymeren um Polystyrol-HI (High-Impact), Polyphenylenether, Polyamide, Polyester, Polycarbonate und Blends oder Polymerblends vom Typ ABS (Acrylnitril-Butadien-Styrol) oder PC/ABS (Polycarbonat/ Acrylnitril-Butadien-Styrol) Polyamid, P>olyester und/oder ABS handelt.

14. Polymer-Formkörper, -Filme, -Fäden und -Fasern nach Anspruch 13, **dadurch gekennzeichnet, dass** sie die Komponente A in einer Menge von 2 bis 20 Gew.-%, die Komponente B in einer Menge von 1 bis 30 Gew.-% und die Komponente C in einer Menge von 0,5 bis 20 Gew.-%, bezogen auf den Polymergehalt, enthalten.

15. Polymer-Formkörper, -Filme, -Fäden und -Fasern nach Anspruch 13 oder 14, **dadurch gekennzeichnet, dass** sie die Komponente A in einer Menge von 5 bis 10 Gew.-%, die Komponente B in einer Menge von 5 bis 10 Gew.-% und die Komponente C in einer Menge von 0,5 bis 10 Gew.-%, bezogen auf den Polymergehalt, enthalten.

## Claims

1. A flame retardant-nanofiller combination for thermoplastic polymers, which comprises, as component A, a phosphinic salt of the formula (I) and/or a diphosphinic salt of the formula (II) and/or polymers of these, 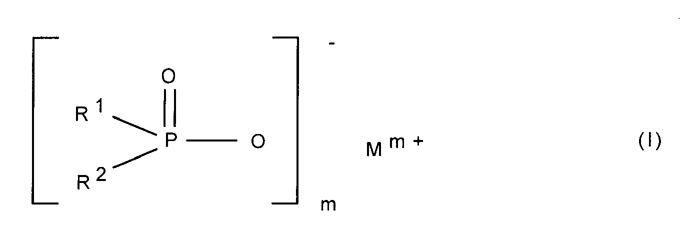 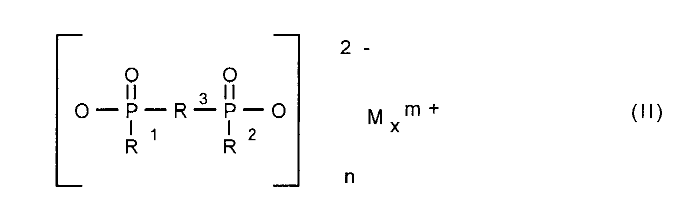 where
R¹, R² are identical or different and are C₁-C₆-alkyl, linear or branched, and/or aryl;
R³ is C₁-C₁₀-alkylene, linear or branched, C₆-C₁₀-arylene, -alkylarylene or -arylalkylene;
M is Mg, Ca, Al, Sb, Sn, Ge, Ti, Zn, Fe, Zr, Ce, Bi, Sr, Mn, Li, Na, K, and/or a protonated nitrogen base;
m is 1 to 4;
n is 1 to 4;
x is 1 to 4,
and comprises, as component B, condensation products of melamine, and/or reaction products of melamine with phosphoric acid or polyphosphoric acid, and/or comprises reaction products of condensation products of melamine with phosphoric acid or polyphosphoric acid, and/or comprises a mixture of these, and comprises, as component C, organic intercalated phyllosilicates, a nanospherical oxide, or carbon nanotubes, where these have a distance of from 1.5 to 4 nm between the layers.

2. The flame retardant-nanofiller combination as claimed in claim 1, wherein R¹ and R² are identical or different and are methyl, ethyl, n-propyl, isopropyl, n-butyl, tert-butyl, n-pentyl and/or phenyl.

3. The flame retardant-nanofiller combination as claimed in claim 1 or 2, wherein R³ is methylene, ethylene, n-propylene, isopropylene, n-butylene, tert-butylene, n-pentylene, n-octylene or n-dodecylene; phenylene or naphthylene; methylphenylene, ethylphenylene, tert-butylphenylene, methylnaphthylene, ethylnaphthylene or tert-butylnaphthylene; phenylmethylene, phenylethylene, phenylpropylene, or phenylbutylene.

4. The flame retardant-nanofiller combination as claimed in one or more of claims 1 to 3, wherein component B comprises condensation products of melamine, for example melem, melam, melon and/or compounds thereof having higher condensation levels.

5. The flame retardant-nanofiller combination as claimed in one or more of claims 1 to 4, wherein component B comprises reaction products of melamine with polyphosphoric acid and/or comprises reaction products of condensation products of melamine with polyphosphoric acid, or comprises a mixture thereof.

6. The flame retardant-nanofiller combination as claimed in one or more of claims 1 to 5, wherein the reaction products comprise dimelamine pyrophosphate, melamine polyphosphate, melem polyphosphate, melam polyphosphate, melon polyphosphate, and/or mixed polysalts of this type.

7. The flame retardant-nanofiller combination as claimed in one or more of claims 1 to 6, wherein the organic intercalated phyllosilicates comprise materials for which the starting materials are swellable smectites, such as montmorillonite, hectorite, saponite, or beidellite.

8. The flame retardant-nanofiller combination as claimed in one or more of claims 1 to 7, wherein the phyllosilicates have been intercalated using quaternary ammonium compounds, protonated amines, organic phosphonium ions, and/or aminocarboxylic acids.

9. A flame-retardant plastics molding composition which comprises a flame retardant-nanofiller combination as claimed in one or more of claims 1 to 8, wherein the plastic comprises thermoplastic polymers of the type represented by HI (high-impact) polystyrene, polyphenylene ethers, polyamides, polyesters, polycarbonates, and blends or polyblends of the type represented by ABS (acrylonitrile-butadiene-styrene) or PC/ABS (polycarbonate/acrylonitrile-butadiene-styrene), or PPE/HIPS (polyphenylene ether/HI polystyrene) plastics.

10. The flame-retardant plastics molding composition as claimed in claim 9, wherein the plastic comprises polyamides, polyesters and PPE/HIPS blends.

11. The flame-retardant plastics molding composition as claimed in claim 9 or 10, wherein the amount used of component A is from 2 to 20% by weight, the amount used of component B is from 1 to 30% by weight, and the amount used of component C is from 0.05 to 20% by weight, based on the plastics molding composition.

12. The flame-retardant plastics molding composition as claimed in one or more of claims 9 to 11, wherein the amount used of component A is from 5 to 10% by weight, the amount used of component B is from 5 to 10% by weight, and the amount used of component C is from 0.05 to 10% by weight, based on the plastics molding composition.

13. A polymer molding, a polymer film, a polymer filament, or a polymer fiber which comprises a flame retardant-stabilizer combination as claimed in one or more claims 1 to 8, wherein the polymer comprises HI (high-impact) polystyrene, polyphenylene ethers, polyamides, polyesters, polycarbonates, and blends or polyblends of the type represented by ABS (acrylonitrile-butadiene-styrene), or PC/ABS (polycarbonate/acrylonitrile-butadiene-styrene), polyamide, polyester and/or ABS.

14. The polymer molding, polymer film, polymer filament, or polymer fiber as claimed in claim 13, wherein the amount of component A present is from 2 to 20% by weight, the amount of component B present is from 1 to 30% by weight, and the amount of component C present is from 0.5 to 20% by weight, based on the polymer content.

15. The polymer molding, polymer film, polymer filament, or polymer fiber as claimed in claim 13 or 14, wherein the amount of component A present is from 5 to 10% by weight, the amount of component B present is from 5 to 10% by weight, and the amount of component C present is from 0.5 to 10% by weight, based on the polymer content.

## Revendications

1. Combinaison agent ignifuge-charge nanométrique pour polymères thermoplastiques, contenant, comme composant A, un sel d'acide phosphinique de formule (I) et/ou un sel d'acide diphosphinique de formule (II) et/ou leurs polymères, 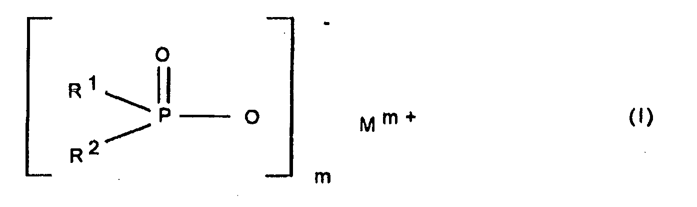 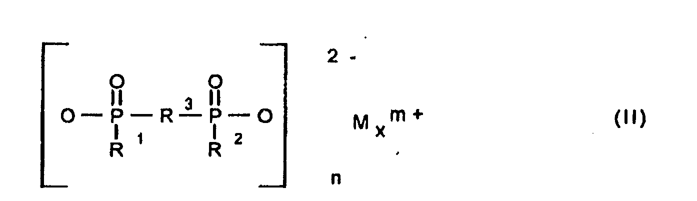 où
R¹, R² sont identiques ou différents et signifient C₁-C₆-alkyle, linéaire ou ramifié et/ou aryle ;
R³ représente C₁-C₁₀-alkylène, linéaire ou ramifié, C₆-C₁₀-arylène, C₆-C₁₀-alkylarylène ou C₆-C₁₀-arylalkylène ;
M signifie Mg, Ca, Al, Sb, Sn, Ge, Ti, Zn, Fe, Zr, Ce, Bi, Sr, Mn, Li, Na, K et/ou une base azotée protonée ;
m vaut 1 à 4 ;
n vaut 1 à 4 ;
x vaut 1 à 4
comme composant B, des produits de condensation de la mélamine et/ou des produits de transformation de la mélamine avec de l'acide phosphorique ou de l'acide polyphosphorique et/ou des produits de transformation de produits de condensation de la mélamine avec de l'acide phosphorique ou de l'acide polyphosphorique et/ou leurs mélanges et, comme composant C, des silicates à couches intercalés organiquement, un oxyde nanosphérique ou des nanotubes de carbone, présentant une distance entre les couches de 1,5 à 4 nm.

2. Combinaison agent ignifuge-charge nanométrique selon la revendication 1, **caractérisée en ce que** R¹, R² sont identiques ou différents et signifient méthyle, éthyle, n-propyle, iso-propyle, n-butyle, tert-butyle, n-pentyle et/ou phényle.

3. Combinaison agent ignifuge-charge nanométrique selon la revendication 1 ou 2, **caractérisée en ce que** R³ signifie méthylène, éthylène, n-propylène, isopropylène, n-butylène, tert-butylène, n-pentylène, n-octylène ou n-dodécylène ; phénylène ou naphtylène ; méthylphénylène, éthylphénylène, tert-butylphénylène, méthylnaphtylène, éthylnaphtylène ou tert-butylnaphtylène ; phénylméthylène, phényléthylène, phénylpropylène ou phénylbutylène.

4. Combinaison agent ignifuge-charge nanométrique selon l'une ou plusieurs des revendications 1 à 3, **caractérisée en ce qu'**il s'agit, pour le composant B, de produits de condensation de la mélamine, tels que le mélem, le mélam, le mélon et/ou des composés à condensation supérieure.

5. Combinaison agent ignifuge-charge nanométrique selon l'une ou plusieurs des revendications 1 à 4, **caractérisée en ce qu'**il s'agit, pour le composant B, de produits de transformation de la mélamine avec de l'acide polyphosphorique et/ou de produits de transformation de produits de condensation de la mélamine avec de l'acide polyphosphorique ou de leurs mélanges.

6. Combinaison agent ignifuge-charge nanométrique selon l'une ou plusieurs des revendications 1 à 5, **caractérisée en ce qu'**il s'agit, pour les produits de transformation, de pyrophosphate de dimélamine, de polyphosphate de mélamine, de polyphosphate de mélem, de polyphosphate de mélam, de polyphosphate de mélon et/ou de polysels mixtes de ce type.

7. Combinaison agent ignifuge-charge nanométrique selon l'une ou plusieurs des revendications 1 à 6, **caractérisée en ce qu'**il s'agit, pour les silicates à couches intercalés organiquement, de matériaux dont les matériaux de départ sont des smectites gonflables, tels que la montmorillonite, l'hectorite, la saponite ou la beidellite.

8. Combinaison agent ignifuge-charge nanométrique selon l'une ou plusieurs des revendications 1 à 7, **caractérisée en ce que** les silicates à couches sont intercalés avec des composés d'ammonium quaternaire, des amines protonées, des ions phosphonium organiques et/ou des acides aminocarboxyliques.

9. Masse de moulage en matériau synthétique apprêté de manière ignifuge, contenant une combinaison agent ignifuge-charge nanométrique selon l'une ou plusieurs des revendications 1 à 8, **caractérisée en ce qu'**il s'agit, pour le matériau synthétique, de polymères thermoplastiques du type polystyrène-HI (High-Impact), polyphénylénéthers, polyamides, polyesters, polycarbonates et de mélanges ; ou de mélanges polymères de type ABS (acrylonitrile-butadiène-styrène) ou PC/ABS (polycarbonate/acrylonitrile-butadiène-styrène) ou PPE/HIPS (polyphénylène-éther/polystyrène-HI) matériaux synthétiques.

10. Masse de moulage en matériau synthétique apprêté de manière ignifuge, selon la revendication 9, **caractérisée en ce qu'**il s'agit, pour le matériau synthétique, de polyamides, de polyesters et de mélanges PPE/HIPS.

11. Masse de moulage en matériau synthétique apprêté de manière ignifuge, selon la revendication 9 ou 10, **caractérisée en ce que** le composant A est utilisé en une quantité de 2 à 20% en poids, le composant B en une quantité de 1 à 30% en poids et le composant C en une quantité de 0,05 à 20% en poids, par rapport à la masse de moulage en matériau synthétique.

12. Masse de moulage en matériau synthétique apprêté de manière ignifuge, selon l'une ou plusieurs des revendications 9 à 11, **caractérisée en ce que** le composant A est utilisé en une quantité de 5 à 10% en poids, le composant B en une quantité de 5 à 10% en poids et le composant C en une quantité de 0,05 à 10% en poids, par rapport à la masse de moulage en matériau synthétique.

13. Corps façonnés, films, fils et fibres polymères contenant une combinaison agent ignifuge-stabilisant selon l'une ou plusieurs des revendications 1 à 8, **caractérisés en ce qu'**il s'agit, pour les polymères, de polystyrène-HI (High-Impact), de polyphénylénéthers, de polyamides, de polyesters, de polycarbonates et de mélanges ; ou de mélanges polymères de type ABS (acrylonitrile-butadiène-styrène) ou PC/ABS (polycarbonate/acrylonitrile-butadiène-styrène), de polyamide, de polyester et/ou d'ABS.

14. Corps façonnés, films, fils et fibres polymères selon la revendication 13, **caractérisés en ce qu'**ils contiennent le composant A en une quantité de 2 à 20% en poids, le composant B en une quantité de 1 à 30% en poids et le composant C en une quantité de 0,5 à 20% en poids, par rapport à la teneur en polymères.

15. Corps façonnés, films, fils et fibres polymères selon la revendication 13 ou 14, **caractérisés en ce qu'**ils contiennent le composant A en une quantité de 5 à 10% en poids, le composant B en une quantité de 5 à 10% en poids et le composant C en une quantité de 0,5 à 10% en poids, par rapport à la teneur en polymères.
